# EUROPEAN PATENT APPLICATION

(11) **EP 4 749 812 A1**
(43) Date of publication of application: **27.05.2026**
(21) Application number: 24850573.7
(22) Date of filing: 18.04.2024
(51) Int. Cl.: H01M 50/593, H01M 50/586, H01M 50/103

(54) **BATTERY CELL, BATTERY, AND ELECTRIC DEVICE**

(30) Priority: 08.08.2023 CN 202322124408 U
(71) Applicant: Contemporary Amperex Technology Co., Limited, Ningde, Fujian 352100 (CN)
(72) Inventor: WU, Kai, Ningde, Fujian 352100 (CN); ZHOU, Wenlin, Ningde, Fujian 352100 (CN); ZHOU, Jian, Ningde, Fujian 352100 (CN); ZHENG, Ting, Ningde, Fujian 352100 (CN); LI, Quankun, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2024/088507
(87) International publication number: WO 2025/030916

(57) **Abstract**

Embodiments of the present application provide a battery cell, a battery, and an electric device. The battery cell includes a housing, an electrode assembly, and a first insulating member. The housing includes a first wall; the electrode assembly is disposed inside the housing; and the first insulating member is disposed inside the housing and located between the electrode assembly and the first wall, the first insulating member being in contact with the electrode assembly. The first insulating member has a first surface facing the electrode assembly, the first surface being provided with a groove. The technical solution provided by the present application can improve the reliability of the battery.

## Description

### CROSS-REFERENCE TO RELATED APPLICATIONS

The present application claims priority to Chinese Patent Application No. CN202322124408.7, filed on August 8, 2023, and entitled "BATTERY CELL, BATTERY, AND ELECTRIC DEVICE," the entire content of which is incorporated herein by reference.

### TECHNICAL FIELD

The present application relates to the field of battery technology, and more particularly, to a battery cell, a battery, and an electric device.

### BACKGROUND

Energy conservation and emission reduction are key to the sustainable development of the automotive industry, and electric vehicles, due to their advantages in energy saving and environmental protection, have become an important part of the sustainable development of the automotive industry. For electric vehicles, battery technology is a critical factor in their development.

During the manufacturing process of batteries, the reliability of the battery is an issue that cannot be overlooked. Therefore, improving the reliability of batteries is an urgent technical problem to be addressed in battery technology.

### SUMMARY

The present application provides a battery cell, a battery, and an electric device, which can improve the reliability of the battery.

The present application is achieved through the following technical solutions:

According to a first aspect, an embodiment of the present application provides a battery cell, where the battery cell includes a housing, an electrode assembly, and a first insulating member. The housing includes a first wall; the electrode assembly is disposed inside the housing; and the first insulating member is disposed inside the housing and located between the electrode assembly and the first wall, the first insulating member being in contact with the electrode assembly. The first insulating member has a first surface facing the electrode assembly, and the first surface is provided with a groove.

According to the battery cell of the embodiment of the present application, a first insulating member is disposed between the first wall and the electrode assembly, the first insulating member being in contact with the electrode assembly to insulate and isolate the electrode assembly from the first wall, and a groove is provided on the first surface of the first insulating member facing the electrode assembly. When the battery cell is used in an inverted position, the electrode assembly is located above the first insulating member, and the groove can accommodate an active substance layer that detaches from the electrode assembly, reducing the probability of the active substance layer coming into contact with the housing, further reducing the risk of corrosion and leakage of the housing, and enabling the battery cell to have relatively high reliability.

According to some embodiments of the present application, in the thickness direction of the first wall, the groove does not penetrate the first insulating member.

In the above solution, the groove does not penetrate the first insulating member, and the groove can constrain the active substance layer entering the groove, reducing the risk of the active substance layer in the groove passing through the first insulating member along the thickness direction of the first wall.

According to some embodiments of the present application, in the thickness direction of the first wall, the depth of the groove is H1, satisfying 0.2 mm ≤ H1 ≤ 4 mm.

In the above solution, the depth H1 of the groove satisfies the above relationship (0.2 mm ≤ H1 ≤ 4 mm), which enables storage of a large amount of active substance layer and electrolyte, reducing the risk of the active substance layer clogging the groove, and facilitates the reabsorption of electrolyte by a separator.

According to some embodiments of the present application, 1 mm ≤ H1 ≤ 2 mm.

In the above solution, when H1 ≥ 1 mm, compared to H1 < 1 mm, the groove can accommodate more active substance layer and electrolyte, reducing the risk of the active substance layer clogging the groove; and when H1 ≤ 2 mm, compared to H1 > 2 mm, the groove has a shallower depth, facilitating the reabsorption of electrolyte by the separator, with better electrolyte reflow effect.

According to some embodiments of the present application, the first insulating member is a plate-shaped structure.

In the above solution, the first insulating member is a plate-shaped structure, providing a relatively large contact area with the electrode assembly, effectively increasing the stress-bearing area of the electrode assembly, and alleviating the issue of detachment of the active substance layer from the electrode assembly, thereby extending the service life of the battery cell. Additionally, the first insulating member being a plate-shaped structure can reduce the size of the first insulating member along its thickness direction, thereby reducing the space occupancy rate of the first insulating member within the housing, which is conducive to increasing the energy density of the battery cell.

According to some embodiments of the present application, the battery cell further includes a pressure relief mechanism, the pressure relief mechanism is disposed on the first wall, the first surface includes a first region, a second region, and a third region sequentially arranged along a first direction, the second region corresponds to the pressure relief mechanism, the first region and the third region are each provided with the groove, and the first direction intersects with the thickness direction of the first wall.

In the above solution, the first region and the third region are each provided with a groove to facilitate the collection of detached active substance layers at multiple locations.

According to some embodiments of the present application, the first region is provided with multiple grooves, the multiple grooves being arranged in a matrix; and/or the third region is provided with multiple grooves, the multiple grooves being arranged in a matrix.

In the above solution, the multiple grooves are arranged in a matrix, enabling the formation of a relatively large space for accommodating the active substance layer in the corresponding region, thus facilitating the collection of the active substance layer.

According to some embodiments of the present application, the groove is a blind hole.

In the above solution, the groove is a blind hole, capable of reducing the risk of the active substance layer penetrating the first insulating member and coming into contact with the housing.

According to some embodiments of the present application, the groove is elongated, and a length direction of the groove is parallel to the first direction.

In the above solution, the groove is elongated and parallel to the first direction, facilitating manufacturing and capable of accommodating a large amount of active substance layer and electrolyte.

According to some embodiments of the present application, a width of the groove is W, satisfying 0.2 mm ≤ W ≤ 5 mm.

In the above solution, the width W of the groove satisfies the above relationship (0.2 mm ≤ W ≤ 5 mm), which reduces manufacturing difficulty, and reduces the risk of the opening of the groove scraping the separator or active substance layer, which could lead to damage to the electrode assembly.

According to some embodiments of the present application, 2 mm ≤ W ≤ 3.5 mm.

In the above solution, compared to W < 2 mm, W ≥ 2 mm facilitates manufacturing with relatively low manufacturing difficulty; and when W ≤ 3.5 mm, compared to W > 3.5 mm, the opening of the groove is less likely to scrape the separator or active substance layer, reducing the risk of damage to the electrode assembly.

According to some embodiments of the present application, the first direction is parallel to a length direction of the first wall.

In the above solution, the first direction is parallel to the length direction of the first wall, enabling the first insulating member to have a relatively large area, thus providing a relatively large overlapping area with the electrode assembly.

According to some embodiments of the present application, the second region is provided with a through-hole.

In the above solution, the second region is provided with a through-hole to allow gas to quickly pass through the first insulating member and flow toward the pressure relief mechanism during pressure relief of the pressure relief mechanism, achieving timely pressure relief.

According to some embodiments of the present application, the battery cell further includes a second insulating member, the second insulating member is disposed between the first insulating member and the first wall, and the first insulating member is configured to support the electrode assembly.

In the above solution, the first insulating member can effectively support the electrode assembly, and when used in conjunction with the second insulating member, it can reduce the risk of internal short circuits in the battery cell and reduce the risk of the active substance layer coming into contact with the housing.

According to some embodiments of the present application, the battery cell further includes an electrode terminal, the electrode terminal is disposed on the first wall and penetrates the second insulating member, and the electrode assembly includes a main body and a tab extending from the main body, the tab bypassing the first insulating member to electrically connect with the electrode terminal.

In the above solution, the electrode terminal is disposed on the first wall to form an output pole of the battery cell, and the tab of the electrode assembly bypasses the first insulating member to connect with the electrode terminal, enabling electrical connection between the electrode assembly and the electrode terminal.

According to some embodiments of the present application, the battery cell further includes an adapter disposed between the second insulating member and the first insulating member, the adapter connecting the electrode terminal and the tab.

In the above solution, the battery cell is provided with an adapter to enable the tab to be electrically connected to the electrode terminal through the adapter.

According to some embodiments of the present application, the battery cell further includes an electrode terminal, the electrode terminal is disposed on the first wall, the electrode assembly includes a main body and a tab extending from the main body, the tab bypassing the first insulating member to electrically connect with the electrode terminal, the first surface includes a main body region and an avoidance region, the main body region is configured to support the main body, and the avoidance region is configured to avoid the tab.

In the above solution, the main body region is in contact with the main body and supports the main body, enabling effective support of the electrode assembly; and the avoidance region avoids the tab to reduce interference between the first insulating member and the tab, facilitating reduced assembly space.

According to some embodiments of the present application, the electrode assembly includes a separator, one end of the separator extending into the groove.

In the above solution, one end of the separator extends into the groove, enabling reabsorption of the electrolyte contained in the groove under the capillary effect.

According to some embodiments of the present application, in the thickness direction of the first wall, a projection of the electrode assembly completely falls within the first surface.

In the above solution, the projection of the electrode assembly completely falls within the first surface, which is conducive to increasing the contact area between the first insulating member and the electrode assembly, thereby increasing the stress-bearing area of the electrode assembly and alleviating the issue of carbon detachment from the electrode assembly. Additionally, even if carbon detachment occurs in the electrode assembly, the first insulating member can effectively capture and adsorb the detached carbon powder, effectively reducing the probability of the carbon powder falling onto the housing, the pressure relief mechanism, or other components. This reduces the possibility of abnormalities such as corrosion of housing or blockage of the pressure relief mechanism, effectively prolonging the service life of the battery cell and extending the service life of the battery.

According to some embodiments of the present application, the housing includes a housing body and an end cap, the housing body has an opening, the end cap covers the opening, and the end cap is the first wall.

In the above solution, the end cap is the first wall, facilitating the assembly of the first insulating member with the first wall.

According to a second aspect, an embodiment of the present application further provides a battery, including the battery cell provided in any one of the above embodiments.

According to a third aspect, an embodiment of the present application further provides an electric device, including the battery cell or the battery provided in any one of the above embodiments, the battery cell or the battery being configured to provide electric energy.

Additional aspects and advantages of the present application will be partially provided in the following description, and some will become apparent from the following description or be understood through the practice of the present application.

### BRIEF DESCRIPTION OF DRAWINGS

To more clearly illustrate the technical solutions of the embodiments of the present application, the drawings required for use in the embodiments will be briefly introduced below. It should be understood that the following drawings only show some embodiments of the present application and should not be regarded as limiting the scope. For those of ordinary skill in the art, other related drawings can be obtained based on these drawings without creative effort.
FIG. 1 is a schematic structural diagram of a vehicle provided in some embodiments of the present application;
FIG. 2 is an exploded view of a battery provided in some embodiments of the present application;
FIG. 3 is an exploded view of a battery cell provided in some embodiments of the present application;
FIG. 4 is a cross-sectional view of a battery cell provided in some embodiments of the present application;
FIG. 5 is a partial enlarged view at A in FIG. 4;
FIG. 6 is a perspective view of a first insulating member provided in some embodiments of the present application;
FIG. 7 is a plan view of the first insulating member provided in FIG. 6;
FIG. 8 is a perspective view of a first insulating member provided in some other embodiments of the present application;
FIG. 9 is a plan view of the first insulating member provided in FIG. 8;
FIG. 10 is a partial enlarged view at B in FIG. 9;
FIG. 11 is a schematic diagram of connection between an electrode terminal and a tab provided in some embodiments of the present application; and
FIG. 12 is a schematic diagram of assembly of a separator and a groove provided in some embodiments of the present application.

In the drawings, the drawings are not drawn to actual scale.

Description of reference signs: 100. battery; 10. box; 11. first sub-box; 12. second sub-box; 20. battery cell; 21. housing; 210. first wall; 211. housing body; 212. end cap; 22. electrode assembly; 221. main body; 222. tab; 223. separator; 23. first insulating member; 231. first surface; 231a. first region; 231b. second region; 231c. third region; 232. groove; 233. through-hole; 234. main body region; 235. avoidance region; 24. pressure relief mechanism; 25. second insulating member; 26. electrode terminal; 27. adapter; 200. controller; 300. motor; 1000. vehicle; X. first direction; Y. second direction; and Z. thickness direction of the first wall.

### DESCRIPTION OF EMBODIMENTS

To make the objectives, technical solutions, and advantages of the embodiments of the present application clearer, the technical solutions in the embodiments of the present application will be described clearly and completely below in conjunction with the drawings in the embodiments of the present application. Obviously, the described embodiments are some of the embodiments of the present application, not all of them. Based on the embodiments in the present application, all other embodiments obtained by those of ordinary skill in the art without creative effort fall within the protection scope of the present application.

Unless otherwise defined, all technical and scientific terms used in the present application have the same meaning as commonly understood by those skilled in the technical field of the present application; the terms used in the specification of the present application are only for the purpose of describing specific embodiments and are not intended to limit the present application; and the terms "include" and "have" and any variations thereof in the specification, claims, and the above description of the drawings of the present application are intended to cover non-exclusive inclusion. The terms "first," "second," and the like in the specification, claims, or the above description of the drawings of the present application are used to distinguish different objects and not to describe a specific order or primary-secondary relationship.

Reference to "embodiment" in the present application means that a specific feature, structure, or characteristic described in connection with the embodiment may be included in at least one embodiment of the present application. The appearance of this phrase in various places in the specification does not necessarily refer to the same embodiment, nor is it a separate or alternative embodiment mutually exclusive with other embodiments. Those skilled in the art explicitly and implicitly understand that the embodiments described in the present application can be combined with other embodiments.

In the description of the present application, it should be noted that, unless otherwise explicitly specified and limited, the terms "mount," "join," "connect," and "attach" should be understood in a broad sense. For example, it may be a fixed connection, a detachable connection, or an integral connection; or it may be a direct connection, an indirect connection through an intermediate medium, or an internal communication between two components. For those of ordinary skill in the art, the specific meanings of the above terms in the present application can be understood according to specific circumstances.

The term "and/or" in the present application is merely an association relationship describing associated objects, indicating that three relationships may exist. For example, A and/or B may indicate: A alone, A and B simultaneously, and B alone. In addition, the character "/" in the present application generally indicates an "or" relationship between the associated objects.

The term "multiple" in the present application refers to two or more (including two). Similarly, "multiple groups" refers to two or more groups (including two groups), and "multiple pieces" refers to two or more pieces (including two pieces).

In some embodiments, the battery may be a battery module, and when there are multiple battery cells, the multiple battery cells are arranged and fixed to form a battery module.

In some embodiments, the battery may be a battery pack, the battery pack includes a box and battery cells, and the battery cells or battery modules are accommodated in the box.

In some embodiments, the box may be part of the chassis structure of a vehicle. For example, a part of the box may become at least a part of the floor of the vehicle, or a part of the box may become at least a part of the crossbeam and longitudinal beam of the vehicle.

In some embodiments, the battery may be an energy storage apparatus. The energy storage apparatus includes an energy storage container, an energy storage cabinet, and the like.

In the embodiments of the present application, the battery cell may be a secondary battery, and the secondary battery refers to a battery cell that can be charged to activate the active material for continued use after discharge of the battery cell.

The battery cell may include, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead-acid battery.

The battery cell generally includes an electrode assembly. The electrode assembly includes a positive electrode, a negative electrode, and a separating member. During the charging and discharging process of the battery cell, active ions (for example, lithium ions) intercalate and deintercalate back and forth between the positive electrode and the negative electrode. The separating member is disposed between the positive electrode and the negative electrode to prevent short-circuiting between the positive and negative electrodes while allowing active ions to pass through.

In some embodiments, the positive electrode may be a positive electrode plate, and the positive electrode plate may include a positive electrode current collector and a positive electrode active material disposed on at least one surface of the positive electrode current collector.

For example, the positive electrode current collector has two opposing surfaces in its thickness direction, and the positive electrode active material is disposed on either or both of the two opposing surfaces of the positive electrode current collector.

For example, the positive electrode current collector may be a metal foil or a composite current collector. For instance, as a metal foil, it may be aluminum treated with silver plating, stainless steel treated with silver plating, stainless steel, copper, aluminum, nickel, carbon electrode, carbon, nickel, or titanium. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on the polymer material substrate (such as polypropylene, polyethylene terephthalate, polybutylene terephthalate, polystyrene, or polyethylene).

For example, the positive electrode active material may include at least one of the following materials: lithium-containing phosphate, lithium transition metal oxide, and their respective modified compounds. However, the present application is not limited to these materials, and other conventional materials that can be used as positive electrode active materials for batteries may also be used.

In some embodiments, the negative electrode may be a negative electrode plate, and the negative electrode plate may include a negative electrode current collector.

For example, the negative electrode current collector may be a metal foil or a composite current collector. For instance, as a metal foil, it may be aluminum treated with silver plating, stainless steel treated with silver plating, stainless steel, copper, aluminum, nickel, carbon electrode, carbon, nickel, or titanium.

In some embodiments, the negative electrode current collector has two opposing surfaces in its thickness direction, and the negative electrode active material is disposed on either or both of the two opposing surfaces of the negative electrode current collector.

For example, the negative electrode active material may be a known negative electrode active material used in batteries. For instance, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compounds, silicon-carbon composites, siliconnitrogen composites, and silicon alloys. The tin-based material may be selected from at least one of elemental tin, tin-oxygen compounds, and tin alloys. However, the present application is not limited to these materials, and other conventional materials that can be used as negative electrode active materials for batteries may also be used. These negative electrode active materials may be used alone or in combination of two or more.

In some embodiments, the separating member is a separator. The present application has no particular limitation on the type of separator, and any well-known porous structure separator with good chemical stability and mechanical stability may be selected.

For example, the main material of the separator may be selected from at least one of glass fiber, non-woven fabric, polyethylene, polypropylene, polyvinylidene fluoride, and ceramic. The separator may be a single-layer film or a multi-layer composite film, with no particular limitation. When the separator is a multi-layer composite film, the materials of various layers may be the same or different, with no particular limitation. The separating member may be a separate component located between the positive and negative electrodes or may be attached to the surfaces of the positive and negative electrodes.

In some embodiments, the separating member is a solid-state electrolyte. The solid-state electrolyte is disposed between the positive electrode and the negative electrode, simultaneously serving to transmit ions and separate the positive and negative electrodes.

In some embodiments, the electrode assembly is a wound structure. The positive electrode plate and the negative electrode plate are wound into a wound structure.

In some embodiments, the electrode assembly is a laminated structure.

In some embodiments, the battery cell may include a housing. The housing is configured to encapsulate the electrode assembly, the electrolyte, and other components. The housing may be a steel housing, an aluminum housing, a plastic housing (for example, polypropylene), a composite metal housing (for example, a copper-aluminum composite housing), an aluminum-plastic film, or the like.

In some embodiments, the housing includes an end cap and a housing body, the housing body having an opening, and the end cap closing the opening to form a sealed space for accommodating the electrode assembly, the electrolyte, and other substances. The housing body may have one or more openings, and one or more end caps may also be provided.

In some embodiments, the housing is provided with at least one electrode terminal, and the electrode terminal is electrically connected to the tab of the electrode assembly. The electrode terminal may be directly connected to the tab or indirectly connected to the tab through an adapter. The electrode terminal may be disposed on the end cap or on the housing body.

In some embodiments, the housing is provided with an explosion-proof valve. The explosion-proof valve is configured to release the internal pressure of the battery cell.

For example, the battery cell may be a cylindrical battery cell, a prismatic battery cell, a pouch battery cell, or a battery cell of other shapes. The prismatic battery cell includes a square-shell battery cell, a blade-shaped battery cell, or a multi-prismatic battery cell, the multi-prismatic battery cell being, for example, a hexagonal prismatic battery, with no particular limitation in the embodiments of the present application.

For the development of battery technology, multiple design factors need to be considered simultaneously, such as energy density, discharge capacity, chargedischarge rate, and other performance parameters, as well as the reliability of the battery.

In some technologies, the battery cells within a battery are typically used in an inverted position, with the side of the battery cell provided with electrode terminals facing the bottom of the box accommodating the battery cell. However, when the battery cell is used in an inverted position, the active substance layer (for example, carbon powder) is prone to detachment, and the detached active substance layer easily comes into contact with the housing, leading to corrosion and leakage of the housing, thus affecting the service life of the battery cell and resulting in relatively low reliability of the battery cell.

In view of this, an embodiment of the present application provides a battery cell, where a first insulating member is disposed between the first wall and the electrode assembly, the first insulating member being in contact with the electrode assembly to insulate and isolate the electrode assembly from the first wall, and a groove is provided on the first surface of the first insulating member facing the electrode assembly to reduce the probability of the active substance layer coming into contact with the housing, thereby reducing the risk of corrosion and leakage of the housing, and improving the reliability of the battery cell.

In such a battery cell, when the battery cell is used in an inverted position, the first insulating member is located below the electrode assembly, and by providing the groove on the first surface of the first insulating member facing the electrode assembly, the groove can accommodate the active substance layer detached from the electrode assembly to constrain the detached active substance layer, reducing the probability of the active substance layer coming into contact with the housing, reducing the risk of corrosion and leakage of the housing, and enabling the battery cell to have relatively high reliability.

The battery cell disclosed in the embodiments of the present application is suitable for use in electric devices, including but not limited to, vehicles, ships, or aircraft. A power supply system for such an electric device may be composed of the battery cell or battery disclosed in the present application.

An embodiment of the present application provides an electric device using a battery cell as a power source, where the electric device may include, but is not limited to, a mobile phone, a tablet computer, a laptop computer, an electric toy, an electric tool, an electric bicycle, an electric motorcycle, an electric vehicle, a ship, and spacecraft. The electric toy may include fixed or mobile electric toys, such as game consoles, electric car toys, electric ship toys, and electric airplane toys. The spacecraft may include airplanes, rockets, space shuttles, spaceships, and the like.

For convenience of explanation, the following embodiments take a vehicle 1000 as an example of an electric device according to an embodiment of the present application.

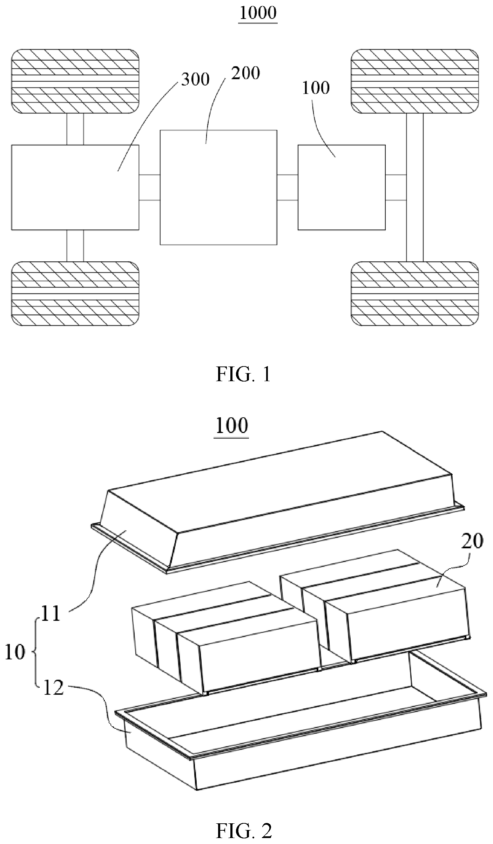

Referring to FIG. 1, FIG. 1 is a schematic structural diagram of a vehicle provided in some embodiments of the present application. The vehicle 1000 may be a fuel vehicle, a gas vehicle, or a new energy vehicle, and the new energy vehicle may be a pure electric vehicle, a hybrid vehicle, an extended-range vehicle, or the like. The interior of the vehicle 1000 is provided with a battery 100, and the battery 100 may be disposed at the bottom, front, or rear of the vehicle 1000. The battery 100 may be used for powering the vehicle 1000. For example, the battery 100 may serve as an operational power source for the vehicle 1000, used for the circuit system of the vehicle 1000, such as for the working power requirements during the startup, navigation, and operation of the vehicle 1000.

The vehicle 1000 may further include a controller 200 and a motor 300, the controller 200 being configured to control the battery 100 to supply power to the motor 300, for example, for the working power requirements during the startup, navigation, and driving of the vehicle 1000.

In some embodiments of the present application, the battery 100 may not only serve as an operational power source for the vehicle 1000 but also as a driving power source for the vehicle 1000, replacing or partially replacing fuel or natural gas to provide driving power for the vehicle 1000.

Referring to FIG. 2, FIG. 2 is an exploded view of a battery provided in some embodiments of the present application. The battery 100 includes a box 10 and a battery cell 20, the battery cell 20 being accommodated in the box 10. The box 10 is configured to provide an accommodation space for the battery cell 20, and the box 10 may adopt various structures. In some embodiments, the box 10 may include a first sub-box 11 and a second sub-box 12, the first sub-box 11 and the second sub-box 12 covering each other, and the first sub-box 11 and the second sub-box 12 jointly defining an accommodation space for the battery cell 20. The second sub-box 12 may be a hollow structure with an opening at one end, and the first sub-box 11 may be a plate-shaped structure, the first sub-box 11 covering the opening side of the second sub-box 12, so that the first sub-box 11 and the second sub-box 12 jointly define the accommodation space. The first sub-box 11 and the second sub-box 12 may alternatively both be hollow structures with an opening on one side, with the opening side of the first sub-box 11 covering the opening side of the second sub-box 12.

In the battery 100, there may be multiple battery cells 20, and the multiple battery cells 20 may be connected in series, in parallel, or in a mixed connection, where a mixed connection refers to a combination of series and parallel connections among the multiple battery cells 20. The multiple battery cells 20 may be directly connected in series, in parallel, or in a mixed connection, and then the entire structure composed of the multiple battery cells 20 is accommodated in the box 10. Alternatively, the battery 100 may be formed by first connecting multiple battery cells 20 in series, in parallel, or in a mixed connection to form a battery module, and then multiple battery modules are connected in series, in parallel, or in a mixed connection to form an entirety accommodated in the box 10. The battery 100 may further include other structures. For example, the battery 100 may further include a busbar component for achieving electrical connections between the multiple battery cells 20.

The battery cell 20 may be a secondary battery or a primary battery. The battery cell 20 may alternatively be a lithium-sulfur battery, a sodium-ion battery, or a magnesium-ion battery, but is not limited thereto.

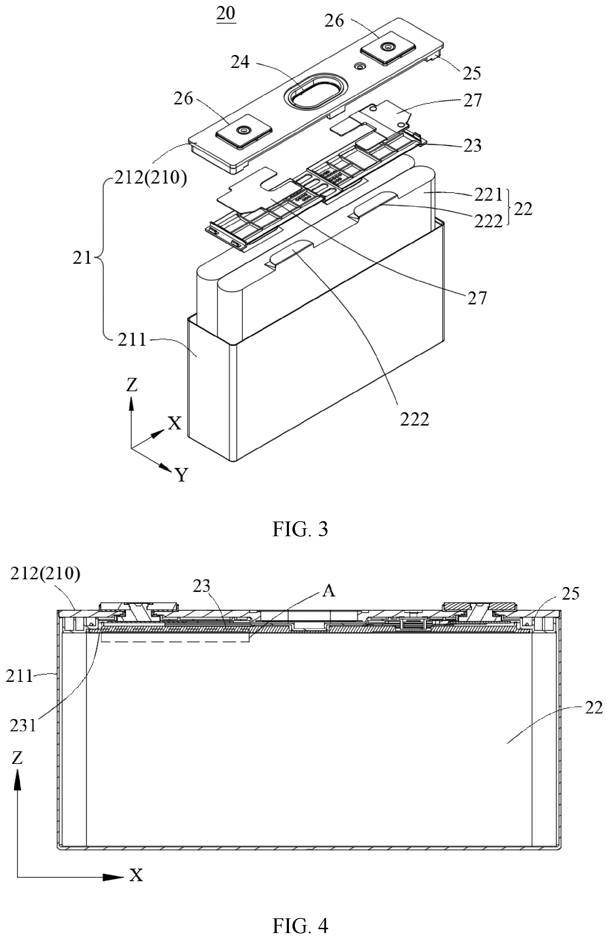

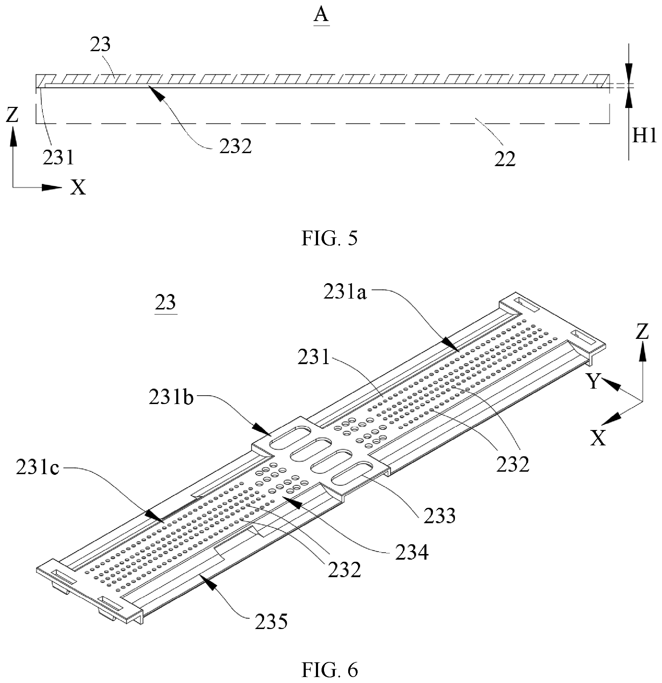

Referring to FIG. 3 to FIG. 5, FIG. 3 is an exploded view of a battery cell provided in some embodiments of the present application, FIG. 4 is a cross-sectional view of a battery cell provided in some embodiments of the present application, and FIG. 5 is a partial enlarged view at A in FIG. 4. According to some embodiments of the present application, an embodiment of the present application provides a battery cell 20, the battery cell 20 including a housing 21, an electrode assembly 22, and a first insulating member 23. The housing 21 includes a first wall 210; the electrode assembly 22 is disposed inside the housing 21; and the first insulating member 23 is disposed inside the housing 21 and located between the electrode assembly 22 and the first wall 210, the first insulating member 23 being in contact with the electrode assembly 22. The first insulating member 23 has a first surface 231 facing the electrode assembly 22, and the first surface 231 is provided with a groove 232.

The electrode assembly 22 is a component in the battery cell 20 where electrochemical reactions occur. The housing 21 may contain one or more electrode assemblies 22. The electrode assembly 22 is mainly formed by winding or stacking a positive electrode plate and a negative electrode plate, and typically a separator is provided between the positive electrode plate and the negative electrode plate, the separator being configured to separate the positive electrode plate and the negative electrode plate to avoid internal short-circuiting between the positive and negative electrode plate. The parts of the positive electrode plate and the negative electrode plate with an active substance constitute the main body of the electrode assembly 22, and the parts of the positive electrode plate and the negative electrode plate without the active substance each constitute a tab. The positive electrode tab and the negative electrode tab may both be located at one end of the main body or respectively at both ends of the main body. During the charging and discharging process of the battery, the positive electrode active substance and the negative electrode active substance react with the electrolyte, and the tabs are connected to the electrode terminals to form a current loop.

The housing 21 provides an accommodation space for the electrode assembly 22, the first insulating member 23, other components, and the electrolyte. The housing 21 may include a housing body 211 and an end cap 212, the housing body 211 having an opening, and the end cap 212 closing the opening to isolate the internal environment of the battery cell 20 from the external environment.

The housing body 211 is a component configured to engage with the end cap 212 to form the internal environment of the battery cell 20, where the formed internal environment can accommodate the electrode assembly 22, the electrolyte, and other components. The housing body 211 and the end cap 212 may be independent components. The housing body 211 may have various shapes and sizes. Specifically, the shape of the housing body 211 may be determined according to the specific shape and size of the electrode assembly 22. The material of the housing body 211 may be various, such as copper, iron, aluminum, stainless steel, aluminum alloy, or plastic.

The end cap 212 refers to a component that covers the opening of the housing body 211 to isolate the internal environment of the battery cell 20 from the external environment. Without limitation, the shape of the end cap 212 may be adapted to the shape of the housing body 211 to engage with the housing body 211. Optionally, the end cap 212 may be made of a material with certain hardness and strength (for example, aluminum alloy), so that the end cap 212 is not easily deformed when subjected to extrusion or collision, enabling the battery cell 20 to have higher structural strength and improved reliability. The end cap 212 may be provided with functional components such as electrode terminals. The electrode terminals may be configured to electrically connect with the electrode assembly 22 for outputting or inputting electric energy of the battery cell 20. The material of the end cap 212 may also be various, such as copper, iron, aluminum, stainless steel, aluminum alloy, or plastic, with no special limitation in the embodiments of the present application. In some embodiments, an insulating structure may be provided on the inner side of the end cap 212, and the insulating structure may be configured to isolate the electrical connection components within the housing body 211 from the end cap 212 to reduce the risk of short-circuiting. For example, the insulating structure may be plastic, rubber, or the like.

The first wall 210 may be the end cap 212 or one wall of the housing body 211. When the battery cell 20 is used in an inverted position, the first wall 210 is located below the electrode assembly 22, and the first insulating member 23 can support the electrode assembly 22.

The first insulating member 23 is disposed inside the housing 21 and located between the electrode assembly 22 and the first wall 210, capable of insulating and isolating the electrode assembly 22 from the first wall 210. In some embodiments, the first insulating member 23 may be disposed on the inner surface of the first wall 210, with both ends of the first insulating member 23 along the thickness direction of the first wall 210 being in contact with the first wall 210 and the electrode assembly 22, respectively. In some embodiments, the first insulating member 23 may also be connected to the first wall 210 through other components (for example, insulating components), such that the first insulating member 23 is in contact with the first wall 210 through these components.

The first surface 231 is the surface of the first insulating member 23 facing the electrode assembly 22, and the first surface 231 is disposed away from the first wall 210.

The groove 232 is a structure provided on the first surface 231 and recessed toward the first wall 210. The opening of the groove 232 faces the electrode assembly 22 to allow the active substance layer detached from the electrode assembly 22 located above the first insulating member 23 to enter the groove 232.

According to the battery cell 20 of the embodiment of the present application, a first insulating member 23 is disposed between the first wall 210 and the electrode assembly 22, the first insulating member 23 being in contact with the electrode assembly 22 to insulate and isolate the electrode assembly 22 from the first wall 210. Furthermore, a groove 232 is provided on the first surface 231 of the first insulating member 23 facing the electrode assembly 22. When the battery cell 20 is used in an inverted position, the first wall 210 faces downward, and the electrode assembly 22 is located above the first insulating member 23. The groove 232 can accommodate the active substance layer detached from the electrode assembly 22, reducing the probability of the active substance layer coming into contact with the housing 21, further reducing the risk of corrosion and leakage of the housing 21, and enabling the battery cell 20 to have relatively high reliability.

According to some embodiments of the present application, the material of the first insulating member 23 may be at least one of polyethylene, polypropylene, polyimide, polytetrafluoroethylene, polyvinyl fluoride, polyvinylidene fluoride, ethylene-tetrafluoroethylene copolymer, propylene-tetrafluoroethylene copolymer, fluorinated ethylene propylene copolymer, and vinylidene fluoridehexafluoropropylene copolymer.

The first insulating member 23 may be made of a polymer. For example, the polymer may be a polymer rich in polar groups that have an affinity for the electrolyte, such as polyimide. The first insulating member 23 made from such a material has better liquid absorption capacity, thereby improving the ability of the first insulating member 23 to absorb the electrolyte, enhancing the infiltrating effect of the electrolyte on the electrode assembly 22, and improving the long-term performance of the battery cell 20.

The material of the first insulating member 23 is made of at least one of the above polymers, which, while supporting the electrode assembly 22, provides good insulation performance. Additionally, the first insulating member 23 has good liquid absorption capacity, effectively improving the infiltrating effect of the electrolyte on the electrode assembly 22, thereby effectively enhancing the performance of the battery cell 20.

Referring to FIG. 5, according to some embodiments of the present application, in the thickness direction Z of the first wall 210, the groove 232 does not penetrate the first insulating member 23.

In the figure, the direction indicated by the letter Z may be the thickness direction of the first wall 210.

The first insulating member 23 further has a second surface facing away from the electrode assembly 22, the second surface being disposed toward the first wall 210. The groove 232 extends from the first surface 231 along the thickness direction Z of the first wall 210 toward the second surface, but the groove 232 does not extend to the second surface, so that the groove 232 does not penetrate the first insulating member 23. In some embodiments, the depth direction of the groove 232 may be parallel to the thickness direction Z of the first wall 210.

In the above solution, the groove 232 does not penetrate the first insulating member 23, and the groove 232 can constrain the active substance layer entering the groove 232, reducing the risk of the active substance layer in the groove 232 passing through the first insulating member 23 along the thickness direction Z of the first wall 210.

Referring to FIG. 5, according to some embodiments of the present application, in the thickness direction Z of the first wall 210, the depth of the groove 232 is H1, satisfying 0.2 mm ≤ H1 ≤ 4 mm.

The depth direction of the groove 232 may be parallel to the thickness direction Z of the first wall 210, and the depth of the groove 232 may be the distance between the bottom wall of the groove 232 and the first wall 210 in the thickness direction Z of the first wall 210.

Optionally, H1 may include, but is not limited to, 0.2 mm, 0.25 mm, 0.5 mm, 0.75 mm, 1 mm, 1.25 mm, 1.5 mm, 1.75 mm, 2 mm, 2.25 mm, 2.5 mm, 2.75 mm, 3 mm, 3.25 mm, 3.5 mm, 3.75 mm, and 4 mm.

In the above solution, the depth H1 of the groove 232 satisfies the above relationship (0.2 mm ≤ H1 ≤ 4 mm), which enables storage of a large amount of active substance layer and electrolyte, reducing the risk of the active substance layer clogging the groove 232, and facilitates the reabsorption of electrolyte by a separator.

According to some embodiments of the present application, 1 mm ≤ H1 ≤ 2 mm.

Optionally, H1 may include, but is not limited to, 1 mm, 1.1 mm, 1.2 mm, 1.3 mm, 1.4 mm, 1.5 mm, 1.6 mm, 1.7 mm, 1.8 mm, 1.9 mm, and 2 mm.

In the above solution, when H1 ≥ 1 mm, compared to H1 < 1 mm, the groove 232 can accommodate more active substance layer and electrolyte, reducing the risk of the active substance layer clogging the groove 232; and when H1 ≤ 2 mm, compared to H1 > 2 mm, the groove 232 has a shallower depth, facilitating the reabsorption of electrolyte by the separator, with better electrolyte reflow effect.

Referring to FIG. 3, according to some embodiments of the present application, the first insulating member 23 is a plate-shaped structure.

The first insulating member 23 may be a flat plate structure. For example, the first insulating member 23 may be a rectangular plate.

The first surface 231 may entirely contact the electrode assembly 22 or only partially contact the electrode assembly 22. Similarly, the end of the electrode assembly 22 facing the first surface 231 may entirely abut the first surface 231, or a partial region of the end of the electrode assembly 22 facing the first surface 231 may abut the first surface 231.

In the above solution, the first insulating member 23 is a plate-shaped structure, providing a relatively large contact area with the electrode assembly 22, effectively increasing the stress-bearing area of the electrode assembly 22, and alleviating the issue of detachment of the active substance layer from the electrode assembly 22, thereby extending the service life of the battery cell 20. Additionally, the first insulating member 23 being a plate-shaped structure can reduce the size of the first insulating member 23 along its thickness direction, thereby reducing the space occupancy rate of the first insulating member 23 within the housing 21, which is conducive to increasing the energy density of the battery cell 20.

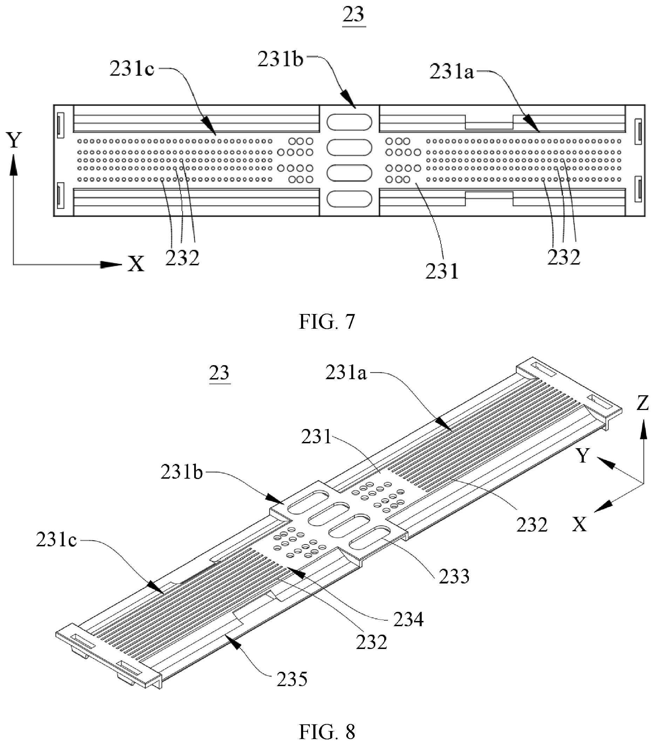

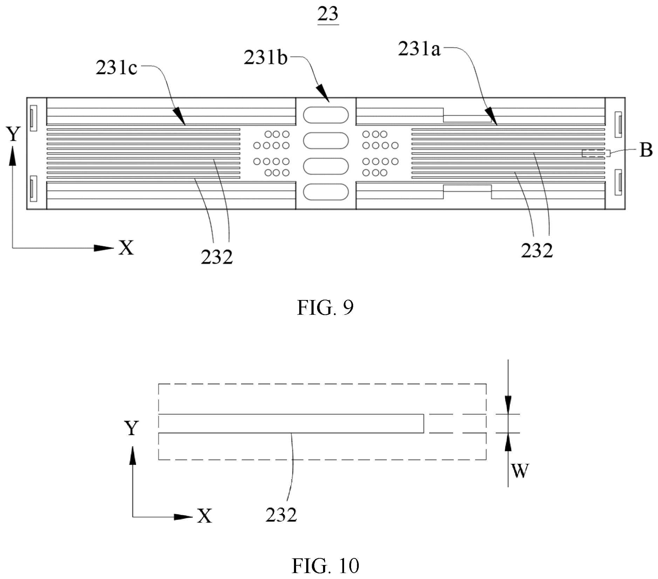

Referring to FIG. 3, and further referring to FIG. 6 to FIG. 9, FIG. 6 is a perspective view of a first insulating member provided in some embodiments of the present application, FIG. 7 is a plan view of the first insulating member provided in FIG. 6, FIG. 8 is a perspective view of a first insulating member provided in some other embodiments of the present application, and FIG. 9 is a plan view of the first insulating member provided in FIG. 8. According to some embodiments of the present application, the battery cell 20 further includes a pressure relief mechanism 24, the pressure relief mechanism 24 is disposed on the first wall 210, the first surface 231 includes a first region 231a, a second region 231b, and a third region 231c sequentially arranged along a first direction X, the second region 231b corresponds to the pressure relief mechanism 24, the first region 231a and the third region 231c are each provided with the groove 232, and the first direction X intersects with the thickness direction Z of the first wall 210.

In the figure, the direction indicated by the letter X may be the first direction.

The pressure relief mechanism 24 refers to an element or component that is actuated to release internal pressure or temperature when the internal pressure or temperature of the battery cell 20 reaches a predetermined threshold. The threshold design varies according to different design requirements. The threshold may depend on the materials of one or more of the positive electrode plate, the negative electrode plate, the electrolyte, and the separator in the battery cell 20. The pressure relief mechanism 24 may take the form of, for example, an explosion-proof valve, a gas valve, a pressure relief valve, or a safety valve, and may specifically adopt a pressure-sensitive or temperature-sensitive element or structure, meaning that when the internal pressure or temperature of the battery cell 20 reaches the predetermined threshold, the pressure relief mechanism 24 performs an action or a weak structure provided in the pressure relief mechanism 24 is damaged, thereby forming an opening or passage for releasing internal pressure or temperature.

The first direction X intersects with the thickness direction Z of the first wall 210, and the first direction X may be parallel to a length direction of the first wall 210.

The first region 231a, the second region 231b, and the third region 231c are sequentially arranged along the first direction X, and the first surface 231 may have a relatively large size in the first direction X, meaning that the first direction X may be parallel to the length direction of the first surface 231.

The second region 231b corresponds to the pressure relief mechanism 24, for example, in the thickness direction Z of the first wall 210, and the projection of the pressure relief mechanism 24 on the first surface 231 falls within the second region 231b.

In some embodiments, the second region 231b may be provided with a through-hole 233.

The through-hole 233 penetrates the first insulating member 23 along the thickness direction Z of the first wall 210, and the through-hole 233 enables communication between the first surface 231 and the second surface, allowing gas to pass through the first insulating member 23 and flow toward the pressure relief mechanism 24.

The second region 231b is provided with a through-hole 233 to allow gas to quickly pass through the first insulating member 23 and flow toward the pressure relief mechanism 24 during pressure relief of the pressure relief mechanism 24, achieving timely pressure relief.

In some embodiments, an insulating structure (for example, a second insulating member) may be provided at a position corresponding to the pressure relief mechanism 24, the insulating structure being disposed between the first insulating member 23 and the first wall 210, and the active substance layer falling into the through-hole 233 is captured by the insulating structure and cannot directly contact the pressure relief mechanism 24.

The first region 231a and the third region 231c are respectively located at both ends of the second region 231b along the first direction X, and the sizes of the first region 231a and the third region 231c in the first direction X are larger than the size of the second region 231b in the first direction X to facilitate the provision of a larger area of grooves 232 on the first surface 231.

In the above solution, the first region 231a and the third region 231c are each provided with a groove 232 to facilitate the collection of detached active substance layers at multiple locations.

Referring to FIG. 6 to FIG. 9, according to some embodiments of the present application, the first region 231a is provided with multiple grooves 232, the multiple grooves 232 being arranged in a matrix; and/or the third region 231c is provided with multiple grooves 232, the multiple grooves 232 being arranged in a matrix.

In the first region 231a, the multiple grooves 232 may be arranged in a matrix to form spaces for accommodating the active substance layer at multiple locations in the first region 231a, facilitating the collection of detached active substance layers. For example, in the first region 231a, the multiple grooves 232 are spaced apart both along the first direction X and along the second direction Y. In the figure, the direction indicated by the letter Y may be the second direction, and the second direction Y may be parallel to the width direction of the first wall 210. The second direction Y, the first direction X, and the thickness direction Z of the first wall 210 are mutually perpendicular.

In the third region 231c, the multiple grooves 232 may be arranged in a matrix to form spaces for accommodating the active substance layer at multiple locations in the third region 231c, facilitating the collection of detached active substance layers. For example, in the third region 231c, the multiple grooves 232 are spaced apart both along the first direction X and along the second direction Y.

In some embodiments, the multiple grooves 232 in the first region 231a are arranged in a matrix, and the multiple grooves 232 in the third region 231c are also arranged in a matrix. The arrangement of the multiple grooves 232 in the third region 231c may be the same as or different from the arrangement of the multiple grooves 232 in the first region 231a. The arrangement of the multiple grooves 232 in the third region 231c being the same as the arrangement of the multiple grooves 232 in the first region 231a facilitates the processing of the grooves 232.

In the above solution, the multiple grooves 232 are arranged in a matrix, making reasonable use of the space of the first surface 231, and enabling the formation of a relatively large space for accommodating the active substance layer in the corresponding region, thus facilitating the collection of the active substance layer.

Referring to FIG. 5, according to some embodiments of the present application, the groove 232 is a blind hole.

A blind hole is a hole that extends from the surface to the inner layer without penetrating the substrate. The groove 232 being a blind hole means that the groove 232 is recessed from the first surface 231 toward the first wall 210 but does not penetrate the first insulating member 23.

The shape of the blind hole may take various forms, such as circular, square, or other polygonal shapes.

In the above solution, the groove 232 is a blind hole, capable of reducing the risk of the active substance layer penetrating the first insulating member 23 and coming into contact with the housing 21.

Referring to FIG. 8 and FIG. 9, according to some embodiments of the present application, the groove 232 is elongated, and a length direction of the groove 232 is parallel to the first direction X.

The groove 232 being elongated means that the groove 232 extends along the first direction X, and the size of the groove 232 in the first direction X is larger than its size in other directions.

The groove 232 may include a straight segment and two arc-shaped segments, the two arc-shaped segments being located at both ends of the straight segment in the first direction X, and the arc-shaped segments may be semicircular.

In some embodiments, in the first region 231a, multiple grooves 232 are provided. Along the first direction X, only one groove 232 is provided in the first region 231a, the groove 232 extending approximately from one end of the first region 231a to the other end; and along the second direction Y, multiple grooves 232 are spaced apart in the first region 231a. In the third region 231c, multiple grooves 232 are provided. Along the first direction X, only one groove 232 is provided in the third region 231c, the groove 232 extending approximately from one end of the third region 231c to the other end; and along the second direction Y, multiple grooves 232 are spaced apart in the third region 231c.

In the above solution, the groove 232 is elongated and parallel to the first direction X, facilitating manufacturing and capable of accommodating a large amount of active substance layer and electrolyte.

Referring to FIG. 10, FIG. 10 is a partial enlarged view at B in FIG. 9. According to some embodiments of the present application, a width of the groove 232 is W, satisfying 0.2 mm ≤ W ≤ 5 mm.

The width of the groove 232 refers to the size of the groove 232 in the direction perpendicular to the length direction of the groove 232. For example, the width direction of the groove 232 is parallel to the second direction Y, and the width of the groove 232 refers to the size of the groove 232 in the second direction Y.

Optionally, W may include, but is not limited to, 0.2 mm, 0.25 mm, 0.3 mm, 0.4 mm, 0.5 mm, 0.75 mm, 1 mm, 1.25 mm, 1.5 mm, 1.75 mm, 2 mm, 2.25 mm, 2.5 mm, 2.75 mm, 3 mm, 3.25 mm, 3.5 mm, 3.75 mm, 4 mm, 4.25 mm, 4.5 mm, 4.75 mm, and 5 mm.

In the above solution, the width W of the groove 232 satisfies the above relationship (0.2 mm ≤ W ≤ 5 mm), which reduces manufacturing difficulty, and reduces the risk of the opening of the groove 232 scraping the separator or active substance layer, which could lead to damage to the electrode assembly 22.

According to some embodiments of the present application, 2 mm ≤ W ≤ 3.5 mm.

Optionally, W may include, but is not limited to, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, and 3.5 mm.

In the above solution, compared to W < 2 mm, W ≥ 2 mm facilitates manufacturing with relatively low manufacturing difficulty; and when W ≤ 3.5 mm, compared to W > 3.5 mm, the opening of the groove 232 is less likely to scrape the separator or active substance layer, reducing the risk of damage to the electrode assembly 22.

Referring to FIG. 3, according to some embodiments of the present application, the first direction X is parallel to the length direction of the first wall 210.

The first direction X is parallel to the length direction of the first wall 210, and the width direction of the first insulating member 23 may be parallel to the width direction of the first wall 210, so that in the thickness direction Z of the first wall 210, the first insulating member 23 can have a relatively large overlapping area with the first wall 210, thereby enabling the first insulating member 23 to have a relatively large contact area with the electrode assembly 22.

In some embodiments, the first insulating member 23 and the first wall 210 may both be rectangular plate-shaped structures.

In the above solution, the first direction X is parallel to the length direction of the first wall 210, enabling the first insulating member 23 to have a relatively large area, thus providing a relatively large overlapping area with the electrode assembly 22 to accommodate active substance layers detached from different positions.

Referring to FIG. 3 and FIG. 4, according to some embodiments of the present application, the battery cell 20 further includes a second insulating member 25, the second insulating member 25 is disposed between the first insulating member 23 and the first wall 210, and the first insulating member 23 is configured to support the electrode assembly 22.

The second insulating member 25 may be disposed on the inner surface of the first wall 210, and in the thickness direction Z of the first wall 210, the opposite ends of the first insulating member 23 may be in contact with the second insulating member 25 and the electrode assembly 22, respectively, to achieve support for the electrode assembly 22, restricting the movement of the electrode assembly 22 in the thickness direction Z of the first wall 210.

In some embodiments, the second insulating member 25 may be connected to the inner surface of the first wall 210 by bonding, snapping, or other connection methods.

In some embodiments, in the thickness direction Z of the first wall 210, the projection of the first insulating member 23 may completely fall within the second insulating member 25. Since the second insulating member 25 is disposed between the first insulating member 23 and the first wall 210, the second insulating member 25 can capture the active substance layer that passes over the first insulating member 23, reducing the risk of the active substance layer coming into contact with the first wall 210.

In some embodiments, when the pressure relief mechanism 24 is disposed on the first wall 210 and the second insulating member 25 is disposed on the inner surface of the first wall 210, the position (the second region 231b) of the first insulating member 23 corresponding to the pressure relief mechanism 24 may be provided with a through-hole 233 to allow gas to pass through the first insulating member 23 and flow toward the pressure relief mechanism 24. In this case, the position of the second insulating member 25 corresponding to the through-hole 233 is not provided with other through-holes, so that the position of the second insulating member 25 corresponding to the through-hole 233 can block the active substance layer from moving toward the pressure relief mechanism 24.

In the above solution, the first insulating member 23 can effectively support the electrode assembly 22, and when used in conjunction with the second insulating member 25, it can reduce the risk of internal short circuits in the battery cell 20 and reduce the risk of the active substance layer coming into contact with the housing 21.

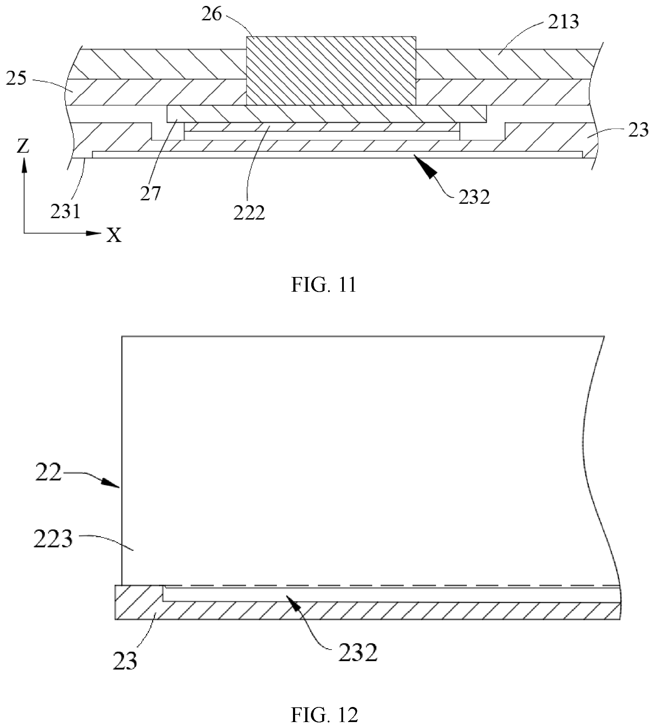

Referring to FIG. 3 and FIG. 4, and further referring to FIG. 11, FIG. 11 is a schematic diagram of connection between an electrode terminal and a tab provided in some embodiments of the present application. According to some embodiments of the present application, the battery cell 20 further includes an electrode terminal 26, the electrode terminal 26 is disposed on the first wall 210 and penetrates the second insulating member 25, and the electrode assembly 22 includes a main body 221 and a tab 222 extending from the main body 221, the tab 222 bypassing the first insulating member 23 to electrically connect with the electrode terminal 26.

The electrode terminal 26 is disposed on the first wall 210, and the first wall 210 is provided with a through-hole through which the electrode terminal 26 passes. Part of the electrode terminal 26 passes through the through-hole, such that the electrode terminal 26 electrically connects with the tab 222, and the electrode terminal 26 can input or output the electric energy of the battery cell 20. The material of the electrode terminal 26 may be various, such as copper, iron, aluminum, steel, or aluminum alloy.

For example, two electrode terminals 26 are provided, both electrode terminals 26 are mounted on the first wall 210, and the two electrode terminals 26 are a positive electrode terminal and a negative electrode terminal, respectively.

The tab 222 serves to output or input the electric energy of the electrode assembly 22. For example, the electrode assembly 22 has two tabs 222, the two tabs 222 being a positive electrode tab and a negative electrode tab, respectively, with the positive electrode tab electrically connected to the positive electrode terminal and the negative electrode tab electrically connected to the negative electrode terminal.

For example, the tab 222 may protrude from the end of the main body 221 facing the first insulating member 23, with one end of the tab 222 connected to the main body 221, and the other end of the tab 222 bypassing the first insulating member 23 along the second direction Y (the width direction of the first insulating member 23) and electrically connected to the electrode terminal 26.

The tab 222 may be directly connected to the electrode terminal 26 by welding, conductive adhesive bonding, or other methods, or an adapter may be provided, with the tab 222 connected to the electrode terminal 26 through the adapter.

In the above solution, the electrode terminal 26 is disposed on the first wall 210 to form the output pole of the battery cell 20, and the tab 222 of the electrode assembly 22 bypasses the first insulating member 23 to connect with the electrode terminal 26, enabling electrical connection between the electrode assembly 22 and the electrode terminal 26.

Referring to FIG. 3 and FIG. 11, according to some embodiments of the present application, the battery cell 20 further includes an adapter 27 disposed between the second insulating member 25 and the first insulating member 23, the adapter 27 connecting the electrode terminal 26 and the tab 222.

The adapter 27 serves to connect the tab 222 and the electrode terminal 26 to achieve electrical connection between the tab 222 and the electrode terminal 26. The material of the adapter 27 may be various, such as copper, iron, aluminum, steel, and aluminum alloy.

For example, the number of adapters 27 is two, with the two adapters 27 corresponding one-to-one with the two electrode terminals 26, meaning that the positive electrode tab of the electrode assembly 22 is connected to the positive electrode terminal through one adapter 27, and the negative electrode tab of the electrode assembly 22 is connected to the negative electrode terminal through another adapter 27.

In the above solution, the battery cell 20 is provided with an adapter 27 to enable the tab 222 to be electrically connected to the electrode terminal 26 through the adapter 27.

Referring to FIG. 3, FIG. 4, FIG. 6, and FIG. 8, according to some embodiments of the present application, the battery cell 20 further includes an electrode terminal 26, the electrode terminal 26 is disposed on the first wall 210, the electrode assembly 22 includes a main body 221 and a tab 222 extending from the main body 221, the tab 222 bypassing the first insulating member 23 to electrically connect with the electrode terminal 26, the first surface 231 includes a main body region 234 and an avoidance region 235, the main body region 234 is configured to support the main body 221, and the avoidance region 235 is configured to avoid the tab 222.

The main body region 234 and the avoidance region 235 are two regions of the first insulating member 23. The main body region 234 has a relatively large overlapping area with the main body 221, the main body region 234 is in contact with the main body 221, and the main body region 234 and the main body 221 have a relatively large contact area to effectively support the electrode assembly 22. The avoidance region 235 corresponds to the tab 222 of the electrode assembly 22, and the region of the tab 222 connected to the main body 221 is located in the avoidance region 235 to reduce the risk of interference between the first insulating member 23 and the tab 222.

During the assembly process of the battery cell 20, the region of the tab 222 connected to the main body 221 is located in the avoidance region 235, and the end of the tab 222 away from the main body 221 bypasses the edge of the first insulating member 23 and is bent to connect with the electrode terminal 26 located on the side of the first insulating member 23 away from the main body 221.

In some embodiments, at least the main body region 234 of the first surface 231 is provided with a groove 232. Optionally, both the main body region 234 and the avoidance region 235 may be provided with grooves 232 to achieve collection of the active substance layer. The active substance layer detached from the electrode assembly 22 can be collected into the grooves 232 on the main body region 234 and the avoidance region 235, thereby reducing the probability of the active substance layer moving to contact the housing 21.

In the above solution, the main body region 234 is in contact with the main body 221 and supports the main body 221, enabling effective support of the electrode assembly 22; and the avoidance region 235 avoids the tab 222 to reduce interference between the first insulating member 23 and the tab 222, facilitating reduced assembly space.

Referring to FIG. 12, FIG. 12 is a schematic diagram of assembly of a separator and a groove provided in some embodiments of the present application. According to some embodiments of the present application, the electrode assembly 22 includes a separator 223, one end of the separator 223 extending into the groove 232.

To reduce the risk of short-circuiting due to contact between the positive electrode plate and the negative electrode plate, the size of the separator 223 is typically larger than the sizes of the positive electrode plate and the negative electrode plate. At the end of the electrode assembly 22 facing the first surface 231, the separator 223 can extend toward the first surface 231 relative to the positive electrode plate and the negative electrode plate, so that a portion of the end of the separator 223 facing the first surface 231 can extend into the groove 232. Since the separator 223 is a porous structure, after the separator 223 contacts the electrolyte in the groove 232, under the capillary effect, the electrolyte can move along the separator 223 to infiltrate the space between the positive electrode plate and the negative electrode plate to participate in the electrochemical reaction of the electrode assembly 22.

In the above solution, one end of the separator 223 extends into the groove 232, enabling reabsorption of the electrolyte contained in the groove 232 under the capillary effect.

According to some embodiments of the present application, in the thickness direction Z of the first wall 210, a projection of the electrode assembly 22 completely falls within the first surface 231.

The thickness direction Z of the first wall 210 is parallel to the arrangement direction of the first insulating member 23 and the electrode assembly 22, meaning that along the direction from the electrode assembly 22 to the first insulating member 23, the projection of the electrode assembly 22 on the first insulating member 23 completely falls within the first surface 231. In other words, in the thickness direction Z of the first wall 210, the first surface 231 of the first insulating member 23 can completely cover the end of the electrode assembly 22 facing the first insulating member 23.

In the above solution, the projection of the electrode assembly 22 completely falls within the first surface 231, which is conducive to increasing the contact area between the first insulating member 23 and the electrode assembly 22, thereby increasing the stress-bearing area of the electrode assembly 22, alleviating the issue of carbon detachment from the electrode assembly 22. Additionally, even if carbon detachment occurs in the electrode assembly 22, the first insulating member 23 can effectively capture and adsorb the detached carbon powder, effectively reducing the probability of the carbon powder falling onto the housing 21, the pressure relief mechanism 24, or other components. This reduces the possibility of abnormalities such as corrosion of the housing 21 or blockage of the pressure relief mechanism 24, effectively prolonging the service life of the battery cell 20 and extending the service life of the battery.

Referring to FIG. 3, according to some embodiments of the present application, the housing 21 includes a housing body 211 and an end cap 212, the housing body 211 having an opening, the end cap 212 covering the opening, and the end cap 212 being the first wall 210.

The housing body 211 and the end cap 212 enclose a sealed cavity for accommodating the electrode assembly 22. When the battery cell 20 is used in an inverted position, the end of the battery cell 20 provided with the electrode terminal 26 faces downward in the thickness direction Z of the first wall 210 or is oriented toward the ground, making the direction of the first wall 210 vertical. The end cap 212 is located on the side of the housing body 211 facing the bottom of the box, the electrode terminal 26 is disposed on the end cap 212, and the first insulating member 23 is disposed between the end cap 212 and the electrode assembly 22 to support the electrode assembly 22.

In the above solution, the end cap 212 is the first wall 210, facilitating the assembly of the first insulating member 23 with the first wall 210.

According to some embodiments of the present application, an embodiment of the present application further provides a battery 100, including the battery cell 20 provided in any one of the above embodiments.

According to some embodiments of the present application, an embodiment of the present application further provides an electric device, including the battery cell 20 or the battery 100 provided in any one of the above embodiments, the battery cell 20 or the battery 100 being configured to provide electric energy.

The electric device may be any of the aforementioned devices or systems using the battery cell 20 or the battery 100.

According to some embodiments of the present application, referring to FIG. 3 to FIG. 12, an embodiment of the present application provides a battery cell 20, the battery cell 20 being in a rectangular parallelepiped shape. The battery cell 20 includes a housing 21, an electrode assembly 22, a first insulating member 23, a pressure relief mechanism 24, a second insulating member 25, an electrode terminal 26, and an adapter 27.

The housing 21 includes a housing body 211 and an end cap 212, the housing body 211 having an opening, the end cap 212 covering the opening, and the end cap 212 being the first wall 210. The pressure relief mechanism 24 and the electrode terminal 26 are both disposed on the first wall 210.

The electrode assembly 22 is disposed inside the housing 21, the electrode assembly 22 including a main body 221 and a tab 222 extending from the main body 221. The second insulating member 25 is disposed on the inner surface of the first wall 210, the first insulating member 23 is disposed inside the housing 21, and the second insulating member 25 is located between the first wall 210 and the first insulating member 23. The first insulating member 23 is in contact with the electrode assembly 22. The first insulating member 23 has a first surface 231 facing the electrode assembly 22, the first surface 231 being provided with a groove 232, the opening of the groove 232 facing the electrode assembly 22, and the groove 232 being a blind hole. The first insulating member 23 is a rectangular plate, the length direction of the first insulating member 23 being parallel to the length direction of the first wall 210, and the width direction of the first insulating member 23 being parallel to the width direction of the first wall 210. The first surface 231 includes a first region 231a, a second region 231b, and a third region 231c sequentially arranged along the first direction X, the second region 231b corresponding to the pressure relief mechanism 24, and the first region 231a and the third region 231c each being provided with the groove 232. In the first region 231a, multiple grooves 232 are arranged in a matrix, and in the third region 231c, multiple grooves 232 are arranged in a matrix. The adapter 27 is disposed between the first insulating member 23 and the second insulating member 25, the electrode terminal 26 is connected to the adapter 27, and the tab 222 bypasses the first insulating member 23 to connect with the adapter 27, thereby achieving electrical connection between the electrode terminal 26 and the tab 222 through the adapter 27. In the thickness direction Z of the first wall 210, the projection of the electrode assembly 22 completely falls within the first surface 231.

In some embodiments, along the first direction X, multiple grooves 232 are provided in the first region 231a, the multiple grooves 232 being spaced apart along the first direction X; and multiple grooves 232 are provided in the third region 231c, the multiple grooves 232 being spaced apart along the first direction X. The groove 232 is a circular blind hole.

In some embodiments, along the first direction X, one groove 232 is provided in the first region 231a, the groove 232 extending from one end of the first region 231a to the other end; and one groove 232 is provided in the third region 231c, the groove 232 extending from one end of the third region 231c to the other end. The groove 232 is elongated, and one end of the separator 223 of the electrode assembly 22 extends into the groove 232 to facilitate reabsorption of the electrolyte in the groove 232 by the separator 223.

According to the battery cell 20 of the embodiment of the present application, when the battery cell 20 is used in an inverted position, the first insulating member 23 is located below the electrode assembly 22, the first insulating member 23 being configured to support the electrode assembly 22. By providing a groove 232 on the first surface 231 of the first insulating member 23 facing the electrode assembly 22, the groove 232 can accommodate the active substance layer detached from the electrode assembly 22 to constrain the detached active substance layer, reducing the probability of the active substance layer coming into contact with the housing 21, reducing the risk of corrosion and leakage of the housing 21, and enabling the battery cell 20 to have relatively high reliability.

Although the present application has been described with reference to preferred embodiments, various improvements can be made thereto and components therein can be replaced with equivalents without departing from the scope of the present application. In particular, as long as there is no structural conflict, the various technical features mentioned in the various embodiments can be combined in any manner. The present application is not limited to the specific embodiments disclosed herein but includes all technical solutions falling within the scope of the claims.

## Claims

1. A battery cell, **characterized by** comprising:
a housing, comprising a first wall;
an electrode assembly, disposed inside the housing; and
a first insulating member, disposed inside the housing and located between the electrode assembly and the first wall, wherein the first insulating member is in contact with the electrode assembly;
wherein the first insulating member has a first surface facing the electrode assembly, the first surface being provided with a groove.

2. The battery cell according to claim 1, **characterized in that** in a thickness direction of the first wall, the groove does not penetrate the first insulating member.

3. The battery cell according to claim 2, **characterized in that** in the thickness direction of the first wall, a depth of the groove is H1, satisfying 0.2 mm ≤ H1 ≤ 4 mm.

4. The battery cell according to claim 3, **characterized in that** 1 mm ≤ H1 ≤ 2 mm.

5. The battery cell according to any one of claims 1 to 4, **characterized in that** the first insulating member is a plate-shaped structure.

6. The battery cell according to any one of claims 1 to 5, **characterized in that** the battery cell further comprises a pressure relief mechanism, the pressure relief mechanism being disposed on the first wall, the first surface comprising a first region, a second region, and a third region sequentially arranged along a first direction, the second region corresponding to the pressure relief mechanism, the first region and the third region each being provided with the groove, and the first direction intersecting with the thickness direction of the first wall.

7. The battery cell according to claim 6, **characterized in that** the first region is provided with multiple grooves, the multiple grooves being arranged in a matrix; and/or
the third region is provided with multiple grooves, the multiple grooves being arranged in a matrix.

8. The battery cell according to claim 7, **characterized in that** the groove is a blind hole.

9. The battery cell according to any one of claims 6 to 8, **characterized in that** the groove is elongated, a length direction of the groove being parallel to the first direction.

10. The battery cell according to claim 9, **characterized in that** a width of the groove is W, satisfying 0.2 mm ≤ W ≤ 5 mm.

11. The battery cell according to claim 10, **characterized in that** 2 mm ≤ W ≤ 3.5 mm.

12. The battery cell according to any one of claims 6 to 11, **characterized in that** the first direction is parallel to a length direction of the first wall.

13. The battery cell according to any one of claims 6 to 12, **characterized in that** the second region is provided with a through-hole.

14. The battery cell according to any one of claims 1 to 13, **characterized in that** the battery cell further comprises a second insulating member, the second insulating member being disposed between the first insulating member and the first wall, and the first insulating member being configured to support the electrode assembly.

15. The battery cell according to claim 14, **characterized in that** the battery cell further comprises an electrode terminal, the electrode terminal being disposed on the first wall and penetrating the second insulating member, the electrode assembly comprising a main body and a tab extending from the main body, and the tab bypassing the first insulating member to electrically connect with the electrode terminal.

16. The battery cell according to claim 15, **characterized in that** the battery cell further comprises an adapter disposed between the second insulating member and the first insulating member, the adapter connecting the electrode terminal and the tab.

17. The battery cell according to any one of claims 1 to 16, **characterized in that** the battery cell further comprises an electrode terminal, the electrode terminal being disposed on the first wall, the electrode assembly comprising a main body and a tab extending from the main body, the tab bypassing the first insulating member to electrically connect with the electrode terminal, the first surface comprising a main body region and an avoidance region, the main body region being configured to support the main body, and the avoidance region being configured to avoid the tab.

18. The battery cell according to any one of claims 1 to 17, **characterized in that** the electrode assembly comprises a separator, one end of the separator extending into the groove.

19. The battery cell according to any one of claims 1 to 18, **characterized in that** in the thickness direction of the first wall, a projection of the electrode assembly completely falls within the first surface.

20. The battery cell according to any one of claims 1 to 19, **characterized in that** the housing comprises a housing body and an end cap, the housing body having an opening, the end cap covering the opening, and the end cap being the first wall.

21. A battery, **characterized by** comprising the battery cell according to any one of claims 1 to 20.

22. An electric device, **characterized by** comprising the battery cell according to any one of claims 1 to 20 or the battery according to claim 21, the battery cell or the battery being configured to provide electric energy.
